# EUROPEAN PATENT APPLICATION

(11) **EP 4 568 005 A1**
(43) Date of publication of application: **11.06.2025**
(21) Application number: 23862776.4
(22) Date of filing: 06.07.2023
(51) Int. Cl.: H01M 50/569, H01G 11/12, H01G 11/70, H01G 11/80, H01M 4/66, H01M 10/04, H01M 10/052, H01M 10/0585, H01M 50/184, H01M 50/186, H01M 50/193, H01M 50/204

(54) **ELECTRIC POWER STORAGE MODULE**

(30) Priority: 05.09.2022 JP 2022140500
(71) Applicant: KABUSHIKI KAISHA TOYOTA JIDOSHOKKI, Kariya-shi, Aichi 448-8671 (JP)
(72) Inventor: SAKAMOTO Shunya, Kariya-shi, Aichi 448-8671 (JP); OKAYAMA Yasuaki, Kariya-shi, Aichi 448-8671 (JP); NIIMURA Kazuhiro, Kariya-shi, Aichi 448-8671 (JP); NAKAMURA Tomohiro, Kariya-shi, Aichi 448-8671 (JP); HIROSE Takayuki, Kariya-shi, Aichi 448-8671 (JP)
(74) Representative: TBK
(86) International application number: PCT/JP2023/025155
(87) International publication number: WO 2024/053231

(57) **Abstract**

An electric power storage module including: an electrode stack including a plurality of electrodes each including a current collector and a detection line joined to the current collector; and a sealing body provided on the electrode stack to surround the electrode stack and configured to seal an internal space between the current collectors adjacent to each other, in which the sealing body includes a plurality of sealing members made of a resin and welded to the plurality of electrodes, respectively, a plurality of spacers each of which is made of a resin, disposed between the sealing members adjacent to each other, and forms the internal space together with each of the sealing members, and an outer side face formed by welding the sealing members and the spacers to each other, each of the plurality of sealing members is welded to the current collector and the detection line joined to the current collector, and the detection line extends from the current collector and is led out from the outer side face along a second direction intersecting the first direction.

## Description

### Technical Field

The present disclosure relates to an electric power storage module.

### Background Art

Patent Literature 1 describes a bipolar secondary battery. In this secondary battery, a plurality of bipolar electrodes each including a positive electrode layer formed on one face of a current collector and a negative electrode layer formed on the other face are disposed in series with an electrolyte layer interposed therebetween, thereby constituting a battery element of a type in which single battery layers each having a stacked structure of the positive electrode layer, the electrolyte layer, and the negative electrode layer are stacked on each other. In addition, a sealing member for insulation between the current collectors is provided at outer peripheral portions of the single battery layers. The sealing member is provided in an extending portion extending outward from the positive electrode layer and the negative electrode layer of each of the current collectors. A detection element for voltage measurement or temperature detection is disposed contact with each of the current collectors.

### Citation List

### Patent Literature

Patent Literature 1: Japanese Unexamined Patent Publication No. 2008-117626

### Summary of Invention

### Technical Problem

When the sealing member made of a resin is welded to the current collector made of metal at the time of manufacturing the bipolar secondary battery described in Patent Literature 1 or the like, there is a possibility that deformation such as wrinkling occurs in the current collector due to contraction of the sealing member after welding due to a difference between a linear expansion coefficient of the sealing member and a linear expansion coefficient of the current collector. In this regard, influence of contraction of the sealing member on the current collector decreases as the sealing member is thinner, and thus it is considered desirable to make a thickness of the sealing member as thin as possible.

Meanwhile, in a case where electrodes each including a current collector and a detection line as a detection element joined to the current collector are stacked to form a stack, there is a possibility that thicknesses of the detection lines are added at a joint portion of the detection lines so that a thickness of the stack locally increases. In this case, it is conceivable to increase the thickness of the sealing member to secure the amount of elastic deformation of the sealing member and absorb an increase in the thickness of the detection line by the elastic deformation of the sealing member. That is, in this case, it is considered desirable to increase the thickness of the sealing member to suppress the local increase in the thickness of the stack.

An object of the present disclosure is to provide an electric power storage module capable of suppressing a local increase in thickness of a stack while suppressing deformation of a current collector.

### Solution to Problem

An electric power storage module according to the present disclosure includes: an electrode stack configured by stacking a plurality of electrodes along a first direction, each of the electrodes including a current collector provided with an active material layer and a detection line joined to the current collector; and a sealing body provided on the electrode stack to surround the electrode stack and configured to seal an internal space between the current collectors adjacent to each other in the first direction, in which the sealing body includes a plurality of sealing members made of a resin and welded to the plurality of electrodes, respectively, a plurality of spacers each of which is made of a resin, disposed between the sealing members adjacent to each other in the first direction, and forms the internal space together with each of the sealing members, and an outer side face formed by a first end face of each of the sealing members on an opposite side to the internal space and a second end face of each of the spacers on an opposite side to the internal space by welding each of the sealing members and each of the spacers to each other, each of the plurality of sealing members is welded to the current collector and the detection line joined to the current collector, and the detection line extends from the current collector and is led out from the outer side face along a second direction intersecting the first direction.

In this electric power storage module, the electrode stack is formed by stacking the electrodes each including the current collector and the detection line joined to the current collector along the first direction. The electrode stack is provided with the sealing body for sealing the internal space between the current collectors. The sealing body includes the sealing member joined to the current collector and the detection line, and the spacer disposed between the sealing members adjacent in the first direction and forms the internal space together with the sealing member. The detection line is led out from the outer side face of the sealing body formed by welding the sealing member and the spacer. As described above, in the electric power storage module, the sealing member is provided as a resin member welded to the current collector (and the detection line), and the spacer is provided as another resin member between the sealing members. Therefore, it is possible to secure the amount of elastic deformation of the resin member by the spacer and absorb an increase in a thickness of the detection line while reducing influence on the current collector due to contraction of the sealing member by thinning the sealing member. Therefore, in this electric power storage module, it is possible to suppress an increase in a local thickness of the electrode stack while suppressing deformation of the current collector.

In the electric power storage module according to the present disclosure, the outer side face may include a protrusion protruding in the second direction in a lead-out portion of the detection line from the outer side face. When the sealing member and the spacer are welded to form the outer side face, there is a possibility that the sealing member and the spacer cannot be sufficiently welded to deteriorate the sealability as heat is released to the detection line around the lead-out portion of the detection line. Therefore, in this case, by providing the protrusion on the outer side face of the sealing body in the lead-out portion of the detection line to secure a large amount of resin, the sealing member and the spacer can be more reliably welded to each other even around the lead-out portion, and the sealability is improved.

In the electric power storage module according to the present disclosure, the lead-out portions of a plurality of the detection lines may be distributed at a plurality of positions in a third direction intersecting the first direction and the second direction as the lead-out portions adjacent to each other in the first direction are provided at different positions in the third direction, and the protrusion may be formed with a width over the plurality of positions in the third direction. In this case, the lead-out portions of the detection lines adjacent to each other in the first direction are located at different positions in the third direction, whereby the separation between the detection lines in the first direction is secured. In addition, at this time, since the protrusions are formed in the sealing members with the width over the plurality of positions where the lead-out portion of the detection lines are provided, the sealing members are more easily prepared as compared with a case of manufacturing a plurality of types of the sealing members provided with the protrusions corresponding to the plurality of positions of the lead-out portion, respectively.

In the electric power storage module according to the present disclosure, at least two of the plurality of detection lines may be disposed so as to overlap each other when viewed in the first direction, and the protrusions in the lead-out portions of the detection lines overlapping each other when viewed in the first direction may be separated from each other in the first direction. In this case, since the unevenness is formed in the lead-out portions of the detection lines on the outer side face, a creepage distance between the detection lines adjacent to each other in the first direction becomes long, so that a short circuit between the detection lines is suppressed.

In the electric power storage module according to the present disclosure, the current collector and the detection line may be made of different types of metal, and a thermal conductivity of metal forming the detection line may be lower than a thermal conductivity of metal forming the current collector. In this case, the heat generated when the outer side face is formed by welding the sealing member and the spacer is suppressed from being released to the current collector via the detection line, and a welding defect between the sealing member and the spacer is suppressed.

In the electric power storage module according to the present disclosure, the current collector and the detection line may be made of metal, and the sealing member may be made of an acid-modified resin. In this case, a joint strength between the sealing member and each of the current collector and the detection line is secured, and the sealability is improved.

In the electric power storage module according to the present disclosure, the detection line may be embedded in the sealing member in a portion where the sealing member and the spacer overlap each other along the first direction. In this case, in the portion where the sealing member and the spacer overlap each other, the detection line is embedded in the sealing member made of the acid-modified resin that can be suitably joined to metal. Therefore, even if the spacer is not an acid-modified resin, it is possible to perform reliable sealing by mutual dissolution with the sealing member in this portion.

In the electric power storage module according to the present disclosure, the detection line may include a notch provided in a portion sandwiched between the current collector and the sealing member along the first direction. In this case, the detection line is prevented from coming off by an anchor effect due to the notch. In particular, since the notch is provided in the portion of the detection line sandwiched between the current collector and the sealing member, the anchor effect is exhibited to prevent the detection line from coming off from a point in time when the sealing member is welded to the current collector and the detection line.

### Advantageous Effects of Invention

According to the present disclosure, it is possible to provide the electric power storage module capable of suppressing the local increase in thickness of the stack while suppressing the deformation of the current collector.

### Brief Description of Drawings

FIG. 1 is a schematic plan view of an electric power storage module according to the present embodiment.
FIG. 2 is a schematic cross-sectional view taken along line II-II of FIG. 1.
FIG. 3 is a plan view illustrating the relationship among a current collector, a detection line, and a sealing member.

### Description of Embodiments

Hereinafter, an electric power storage module according to an embodiment will be described with reference to the drawings. In the description of each of the drawings, the same or equivalent elements will be denoted by the same reference signs, and a redundant description will not be given in some cases. In addition, an orthogonal coordinate system including a first axis defining a first direction D1, a second axis defining a second direction D2, and a third axis defining a third direction D3 may be illustrated in each of the drawings.

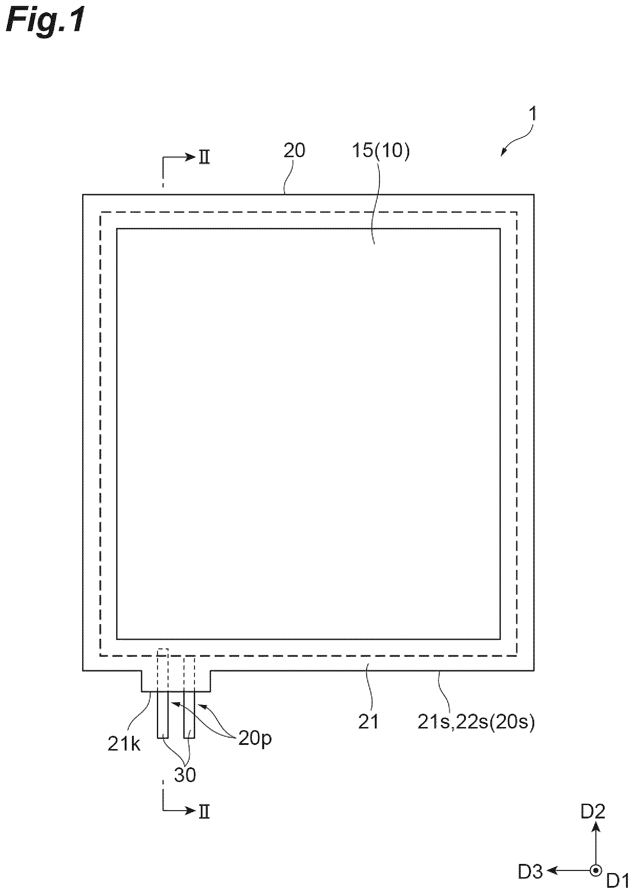

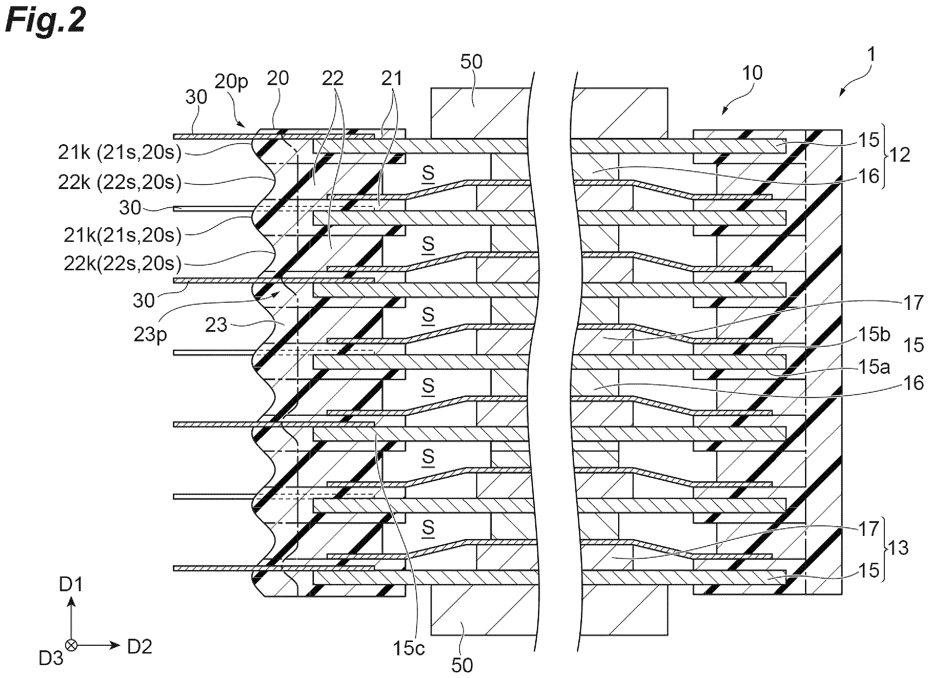

FIG. 1 is a schematic cross-sectional view of the electric power storage module according to the present embodiment. FIG. 2 is a schematic cross-sectional view taken along line II-II of FIG. 1. An electric power storage module 1 illustrated in FIGS. 1 and 2 is an electric power storage module used for batteries of various vehicles such as forklifts, hybrid vehicles, and electric vehicles, for example. The electric power storage module 1 is, for example, a secondary battery such as a nickel-hydrogen secondary battery or a lithium-ion secondary battery. The electric power storage module 1 may be an electric double-layer capacitor or an all-solid-state battery. Herein, a case of the electric power storage module 1 configured as a lithium-ion secondary battery will be illustrated.

The electric power storage module 1 includes an electrode stack 10 and a sealing body 20. The electrode stack 10 includes a plurality of electrodes stacked along the first direction D1. The electrodes include a plurality of bipolar electrodes 11, a positive terminal electrode 12, and a negative terminal electrode 13. A separator 14 is interposed between the electrodes adjacent to each other.

Each of the bipolar electrodes 11 includes a current collector 15, a positive active material layer 16, and a negative active material layer 17. The current collector 15 has, for example, a rectangular sheet shape. The positive active material layer 16 is provided on a first face 15a of the current collector 15. The negative active material layer 17 is provided on a second face 15b of the current collector 15. The bipolar electrodes 11 are stacked such that the positive active material layer 16 of one bipolar electrode 11 is opposite the negative active material layer 17 of another bipolar electrode 11. Herein, the first face 15a of the current collector 15 is a face facing one side in the first direction D1, and the second face 15b of the current collector 15 is a face facing the other side in the first direction D1.

The positive active material layer 16 and the negative active material layer 17 are each rectangular-shaped when viewed in the first direction D1. The negative active material layer 17 has a size larger than that of the positive active material layer 16 when viewed in the first direction D1. That is, in plan view viewed in the first direction D1, the entire area where the positive active material layer 16 is formed is located within an area where the negative active material layer 17 is formed.

The positive terminal electrode 12 includes the current collector 15 and the positive active material layer 16 provided on the first face 15a of the current collector 15. The positive terminal electrode 12 does not include the positive active material layer 16 and the negative active material layer 17 on the second face 15b of the current collector 15. That is, an active material layer is not provided on the second face 15b of the current collector 15 of the positive terminal electrode 12. The positive terminal electrode 12 is stacked on the bipolar electrode 11 at one end portion of the electrode stack 10 in the first direction D1. The positive terminal electrode 12 is stacked on the bipolar electrode 11 such that the positive active material layer 16 thereof is opposite the negative active material layer 17 of the bipolar electrode 11.

The negative terminal electrode 13 includes the current collector 15 and the negative active material layer 17 provided on the second face 15b of the current collector 15. The negative terminal electrode 13 does not include the positive active material layer 16 and the negative active material layer 17 on the first face 15a of the current collector 15. That is, an active material layer is not provided on the first face 15a of the current collector 15 of the negative terminal electrode 13. The negative terminal electrode 13 is stacked on the bipolar electrode 11 at an end portion of the electrode stack 10 on the opposite side to the positive terminal electrode 12 in the first direction D1. The negative terminal electrode 13 is stacked on the bipolar electrode 11 such that the negative active material layer 17 thereof is opposite the positive active material layer 16 of the bipolar electrode 11.

The separator 14 is disposed between the adjacent bipolar electrodes 11, between the positive terminal electrode 12 and the bipolar electrode 11, and between the negative terminal electrode 13 and the bipolar electrode 11. The separator 14 is interposed between the positive active material layer 16 and the negative active material layer 17. The separator 14 separates the positive active material layer 16 and the negative active material layer 17, and allows charge carriers such as lithium ions to pass while preventing a short circuit due to contact between the adjacent electrodes.

The current collector 15 is a chemically inactive electric conductor that causes a current to continuously flow through the positive active material layer 16 and the negative active material layer 17 during discharge or charge of the lithium-ion secondary battery. A material of the current collector 15 is, for example, a metal material, a conductive resin material, a conductive inorganic material, or other materials. Examples of the conductive resin material include a resin obtained by adding a conductive filler to a conductive polymer material or a non-conductive polymer material as necessary. The current collector 15 may include a plurality of layers. In this case, each layer of the current collector 15 may contain the above-described metal material and/or conductive resin material.

A covering layer may be formed on a surface of the current collector 15. The covering layer may be formed by a known method such as plating or spray coating. The current collector 15 may have, for example, a plate shape, a foil shape (for example, metal foil), a film shape, a mesh shape, or other shapes. Examples of the metal foil include an aluminum foil, a copper foil, a nickel foil, a titanium foil, and a stainless steel foil. The current collector 15 may be a foil formed by integrating a metal alloy foil or a plurality of metal foils. In a case where the current collector 15 has a foil shape, a thickness of the current collector 15 may be, for example, 1 µm to 200 µm. In the present embodiment, the current collector 15 is a foil in which an aluminum foil and a copper foil are integrated.

The positive active material layer 16 contains a positive active material capable of occluding and releasing charge carriers such as lithium ions. Examples of the positive active material include a lithium composite metal oxide having a stratified rock salt type structure, a metal oxide having a spinel structure, and a polyanionic compound. The positive active material may be any material that can be used for the lithium-ion secondary battery. The positive active material layer 16 may contain a plurality of the positive active materials. In the present embodiment, the positive active material layer 16 contains olivine type lithium iron phosphate (LiFePO₄) as a composite oxide.

The negative active material layer 17 contains a negative active material capable of occluding and releasing charge carriers such as lithium ions. The negative active material may be any of a simple substance, an alloy, or a compound. Examples of the negative active material include Li, carbon, a metal compound, and other materials. The negative active material may be an element that can be alloyed with lithium, a compound thereof, or other materials. Examples of the carbon include natural graphite, artificial graphite, hard carbon (non-graphitizing carbon), soft carbon (graphitizing carbon), and other carbon materials. Examples of the artificial graphite include highly oriented graphite, meso-carbon microbeads, and other artificial graphite. Examples of the element that can be alloyed with lithium include silicon, tin, and other elements. In the present embodiment, the negative active material layer 17 contains graphite as a carbon-based material.

Each of the positive active material layer 16 and the negative active material layer 17 (hereinafter, also simply referred to as an "active material layer" in some cases) may further contain a conductive auxiliary, a binder, an electrolyte (e.g., polymer matrix, ion conductive polymer, or electrolytic solution) for increase electric conductivity and a supporting electrolyte salt (lithium salt) for increasing ion conductivity as necessary. The conductive auxiliary is added to increase the electric conductivity of each of the electrodes (the bipolar electrodes 11, the positive terminal electrode 12, and the negative terminal electrode 13). The conductive auxiliary is, for example, acetylene black, carbon black, or graphite.

Examples of the binder include fluorine-containing resins such as polyvinylidene fluoride, polytetrafluoroethylene, and fluororubber, thermoplastic resins such as polypropylene and polyethylene, imide resins such as polyimide and polyamidimide, alkoxysilyl group-containing resins, acrylic resins such as acrylic acid and methacrylic acid, styrenebutadiene rubber (SBR), carboxymethyl cellulose, alginates such as sodium alginate and ammonium alginate, water-soluble cellulose ester crosslinked bodies, and starch-acrylic acid graft polymers. These binders can be used alone or in combination. For example, water, N-methyl-2 pyrrolidone (NMP), or the like is used as a solvent.

The separator 14 may be, for example, a porous sheet or a nonwoven fabric containing a polymer that absorbs and holds an electrolyte. Examples of a material of the separator 14 include polypropylene, polyethylene, polyolefin, and polyester. The separator 14 may have a single layer structure or a multilayer structure. The multilayer structure may have, for example, a ceramic layer or the like as an adhesive layer or a heat resistant layer. The separator 14 may be impregnated with an electrolyte. The electrolyte with which the separator 14 is impregnated is a liquid electrolyte (electrolytic solution) containing a nonaqueous solvent and an electrolyte salt dissolved in the nonaqueous solvent.

Known lithium salts such as LiClO₄, LiAsF₆, LiPF₆, LiBF₄, LiCF₃SO₃, LiN(FSO₂)₂, and LiN(CF₃SO₂)₂ may be used as the electrolyte salt of the electrolyte. In addition, a known solvent such as cyclic carbonates, cyclic esters, chain carbonates, or chain esters may be used as the nonaqueous solvent. Note that two or more of these known solvent materials may be used in combination.

Here, the current collector 15 is provided with a detection line 30. Here, the detection line 30 is disposed and joined (for example, ultrasonically welded) onto the second face 15b of the current collector 15. As an example, one detection line 30 is provided in each of the current collectors 15 of all the electrodes. As a result, in the electric power storage module 1, it is possible to detect a battery state (for example, a voltage) of a cell including the electrodes adjacent to each other by using a pair of the detection lines 30 adjacent to each other along the first direction D1. The detection line 30 is, for example, a voltage detection line.

The detection line 30 has a long foil shape and is made of, for example, metal. More specifically, the current collector 15 and the detection line 30 may be made of different types of metal, and in this case, a thermal conductivity of metal forming the detection line 30 may be lower than a thermal conductivity of metal forming the current collector 15. In the present embodiment, the detection line 30 is a stainless foil.

The sealing body 20 is formed in a frame shape at a peripheral edge portion of the electrode stack 10 to surround the electrode stack 10. The sealing body 20 can be joined (welded) to each of the first face 15a and the second face 15b of the current collector 15, at a peripheral edge portion 15c of each of the current collectors 15. The sealing body 20 is provided to form internal spaces S between the adjacent current collectors 15 in the first direction D1, and seal each of the internal spaces S. An electrolyte (for example, an electrolytic solution) is contained in each of the internal spaces S. The sealing body 20 can block the permeation of the electrolytic solution to the outside.

In addition, the sealing body 20 can suppress intrusion of moisture and the like from the outside of the electrode stack 10 into the internal spaces S. The sealing body 20 can prevent gas generated at each electrode due to, for example, charge and discharge reactions or the like from leaking to the outside of the electric power storage module 1. Edge portions of the separators 14 are joined to the sealing body 20. The sealing body 20 includes an insulating material. Examples of a material of the sealing body 20 include various resin materials such as polypropylene, polyethylene, polystyrene, ABS resin, acid-modified polypropylene, acid-modified polyethylene, and acrylonitrile styrene resin.

The sealing body 20 includes a plurality of sealing members 21 made of a resin, a plurality of spacers 22 made of a resin, and a welded end portion 23. Each of the sealing members 21 is provided on each of the current collectors 15. Therefore, the sealing members 21 are stacked on top of each other along the first direction D1. The sealing member 21 has a frame shape (in this case, a rectangular frame shape) when viewed in the first direction D1, and is provided on the peripheral edge portion 15c of the current collector 15. That is, the sealing member 21 is provided to extend from the first face 15a to the second face 15b of the corresponding current collector 15 through its end face, and covers the peripheral edge portion 15c. The sealing member 21 can be welded to the first face 15a and the second face 15b of the current collector 15. Here, the sealing member 21 is welded to the current collector 15 and the detection line 30 joined to the current collector 15.

Each of the spacers 22 is disposed to be interposed between the sealing members 21 adjacent to each other in the first direction D1. As a result, the spacer 22 holds a space between the adjacent sealing members 21, that is, between the adjacent current collectors 15, and forms the internal space S together with the sealing members 21. The spacer 22 has a frame shape (in this case, a rectangular frame shape) when viewed in the first direction D1, and is disposed on the peripheral edge portion 15c of the current collector 15 when viewed in the first direction D1. Here, an end portion of the separator 14 is sandwiched and held between the sealing member 21 and the spacer 22. The separator 14 can be welded to at least one of the sealing member 21 and the spacer 22.

The welded end portion 23 is formed by end portions of the plurality of sealing members 21 and the plurality of spacers 22 that are welded and integrated, the end portions being disposed on the opposite side to the internal spaces S. The welded end portion 23 has a frame shape to surround the electrode stack 10 when viewed in the first direction D1 and forms an outer peripheral portion of the sealing body 20. Therefore, the sealing members 21 and the spacers 22 are welded to each other, so that the sealing body 20 has an outer side face 20s (an outer side face of the welded end portion 23) formed by first end faces 21s of the sealing members 21 on the opposite side to the internal spaces S and second end faces 22s of the spacers 22 on the opposite side to the internal spaces S.

The detection line 30 extends from the current collector 15 and is led out from the outer side face 20s along the second direction D2 intersecting (orthogonal to) the first direction D1. Here, the outer side face 20s has a rectangular tubular shape according to the outer shapes of the sealing member 21 and the spacer 22, and has four faces. Lead-out portions 20p of the detection lines 30 from the outer side face 20s are gathered on one face among the four faces constituting the outer side face 20s.

On the other hand, the lead-out portions 20p of the detection lines 30 adjacent to each other in the first direction are provided at mutually different positions in a third direction D3 intersecting (orthogonal to) the first direction D1 and the second direction D2. In the illustrated example, the lead-out portions 20p of the detection lines 30 are arranged along the first direction D1 such that the positions in the third direction D3 are alternately disposed. That is, the lead-out portions 20p of the detection lines 30 are dispersed at a plurality of (here, two) positions in the third direction D3. On the other hand, at least two (half in the illustrated example) of the plurality of detection lines 30 are disposed so as to overlap each other when viewed in the first direction D1.

Note that a portion of the detection line 30 closer to the electrode stack 10 than the outer side face 20s is embedded in the sealing member 21 in a portion where the sealing member 21 and the spacer 22 overlap each other along the first direction D1. Here, the detection line 30 is terminated inside the sealing member 21, and the entire portion of the detection line 30 closer to the electrode stack 10 than the outer side face 20s is embedded and covered by the sealing member 21. As a result, the detection line 30 is not in contact with the spacer 22.

In addition, a material of the sealing member 21 can be appropriately selected from the above-described materials of the sealing body 20, and is, for example, an acid-modified resin. As a result, when the current collector 15 and the detection line 30 are made of metal, joint strength between the sealing member 21 and each of the current collector 15 and the detection line 30 is secured. Meanwhile, the a of the spacer 22 can also be appropriately selected from the above-described materials of the sealing body 20, but is not necessarily an acid-modified resin.

Here, the outer side face 20s of the sealing body 20 includes protrusions 21k that protrude to the opposite side to the electrode stack 10 along the second direction D2 (a lead-out direction of the detection line 30) in the lead-out portions 20p of the detection lines 30. The protrusions 21k can be formed, for example, by causing the first end faces 21s of the sealing members 21 to protrude along the second direction D2 before forming the welded end portion 23. As described above, the lead-out portions 20p of the detection lines 30 are gathered on one face among the four faces constituting the outer side face 20s.

Therefore, the protrusions 21k are also formed only on one face among the four faces constituting the outer side face 20s. In addition, each of the protrusions 21k is formed to have a width over the plurality of (here, two) positions where the lead-out portions 20p are provided in the third direction D3. Here, one protrusion 21k is provided so as to extend over the lead-out portions 20p of all the detection lines 30 when viewed in the first direction D1.

The protrusions 21k (the protrusions 21k overlapping each other when viewed in the first direction D1) in the lead-out portions 20p of the detection lines 30 overlapping each other when viewed in the first direction D1 are separated from each other in the first direction D1. Therefore, on the outer side face 20s of the sealing body 20, in an area between the adjacent protrusions 21k (for example, an area corresponding to the second end face 22s of the spacer 22), a recess 22k recessed toward the electrode stack 10 along the second direction D2 is formed. When the welded end portion 23 is formed, since the molten sealing member 21 and spacer 22 are dissolved with each other, the molten resin flows from the protrusion 21k to the recess 22k, and a large amount of resin is secured between the sealing member 21 and the spacer 22. In addition, the protrusion 21k and the recess 22k are gently connected.

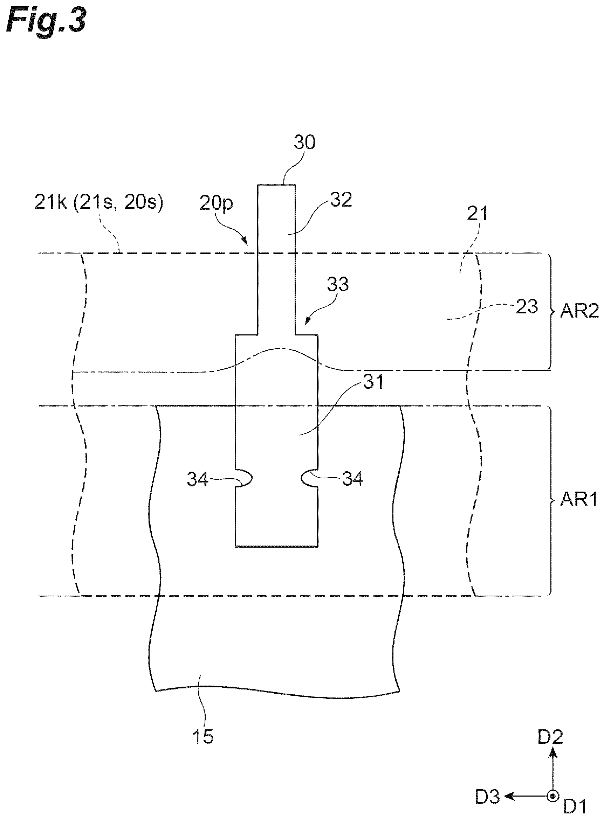

FIG. 3 is a plan view illustrating the relationship among the current collector, the detection line, and the sealing member. In FIG. 3, the sealing member 21 is indicated by a broken line. As illustrated in FIG. 3, the sealing member 21 includes a first area AR1 overlapping the current collector 15 and welded to the current collector 15 when viewed in the first direction D1, and a second area AR2 located outside the current collector 15 when viewed in the first direction D1. The second area AR2 is an area forming the welded end portion 23 by the mutual dissolution with the spacer 22. As in the illustrated example, the second area AR2 may be separated from an outer edge of the current collector 15. That is, in a portion of the sealing member 21 located outside the current collector 15, only a part closer to the first end face 21s may form the welded end portion 23 by the mutual dissolution with the spacer 22. Note that, when the sealing member 21 and the spacer 22 are welded to form the welded end portion 23, heat is released to the detection line 30 around the lead-out portion 20p of the detection line 30, so that an area where the sealing member 21 and the spacer 22 are dissolved with each other may be reduced. Therefore, a width of the welded end portion 23 in the second direction D2 can be reduced around the lead-out portion 20p of the detection line 30 as illustrated in FIGS. 2 and 3.

The detection line 30 includes a first portion 31 and a second portion 32. The second portion 32 is a portion having a narrower width than the first portion 31 when viewed in the first direction D1. As a result, in the detection line 30, a stepped portion 33 is formed between the first portion 31 and the second portion 32. The first portion 31 of the detection line 30 is disposed from the first area AR1 to the second area AR2 of the sealing member 21, and the second portion 32 of the detection line 30 is disposed from the second area AR2 of the sealing member 21 to the outside of the sealing member 21. The stepped portion 33 is located in the second area AR2.

The first portion 31 is provided with a notch 34. In the illustrated example, a pair of the notches 34 is formed to be recessed inward from an outer edge of the first portion 31 along the third direction D3 intersecting the second direction D2 that is the lead-out direction of the detection line 30. The notches 34 are located in the first area AR1 of the sealing member 21. That is, the notches 34 are provided in a portion of the detection line 30 sandwiched between the current collector 15 and the sealing member 21 along the first direction D1 (a portion overlapping the first area AR1 in the first portion 31).

Here, it is conceivable that the following steps, for example, are performed to manufacture the electric power storage module 1. That is, the sealing member 21 is welded to an electrode including the current collector 15 and the detection line 30 to constitute an electrode unit including the electrode and the sealing member 21. Subsequently, the electrode units are stacked on each other with the spacer 22 interposed therebetween. Thereafter, the sealing members 21 and the spacers 22 are welded to form the welded end portion 23.

As described above, the notch 34 of the detection line 30 is located in the first area AR1 welded to the current collector 15 (electrode) of the sealing member 21. Therefore, the notch 34 exerts an anchor effect on the sealing member 21 from a point in time when the sealing member 21 is welded to the electrode to form the electrode unit, and contributes to suppressing the detection line 30 from coming off.

On the other hand, the stepped portion 33 of the detection line 30 is located in the second area AR2 of the sealing member 21 used for the welding to the spacer 22. Therefore, when the welded end portion 23 is formed by welding the sealing members 21 and the spacers 22, the stepped portions 33 exert an anchor effect on the welded end portion 23 and contribute to suppressing the detection lines 30 from coming off.

As described above, in the electric power storage module 1, the electrode stack 10 is formed by stacking the electrodes each including the current collector 15 and the detection line 30 joined to the current collector 15 on each other along the first direction D1. The electrode stack 10 is provided with the sealing body 20 for sealing the internal spaces S between the current collectors 15. The sealing body 20 includes the sealing members 21 welded to the current collectors 15 and the detection lines 30, and the spacers 22 that are disposed between the sealing members 21 adjacent to each other in the first direction D1 and form the internal spaces S together with the sealing members 21. The detection lines 30 are led out from the outer side face 20s of the sealing body 20 formed by welding the sealing members 21 and the spacers 22.

As described above, in the electric power storage module 1, the sealing member 21 is provided as a resin member welded to the current collector 15 (and the detection line 30), and the spacer 22 is provided as another resin member between the sealing members 21. Therefore, it is possible to secure the amount of elastic deformation of the resin member by the spacer 22 and absorb an increase in a thickness of the detection line 30 while reducing the influence on the current collector 15 due to contraction of the sealing member 21 by thinning the sealing member 21. Therefore, in the electric power storage module 1, it is possible to suppress a local increase in a thickness of the electrode stack 10 while suppressing deformation of the current collector 15.

In addition, in the electric power storage module 1, the outer side face 20s of the sealing body 20 includes the protrusions 21k protruding in the second direction D2 in the lead-out portions 20p of the detection lines 30 from the outer side face 20s. When the sealing members 21 and the spacers 22 are welded to form the outer side face 20s, there is a possibility that the sealing members 21 and the spacers 22 cannot be sufficiently welded to deteriorate the sealability as heat is released to the detection lines 30 around the lead-out portions 20p of the detection lines 30. In this regard, by providing the protrusions 21k on the outer side face 20s of the sealing body 20 in the lead-out portions 20p of the detection lines 30 to secure a large amount of resin, the sealing members 21 and the spacers 22 can be more reliably welded to each other even around the lead-out portions 20p, and the sealability is improved.

In addition, there is a case where heating is performed by disposing a heat source so as to face the first end face 21s and the second end face 22s to weld the sealing member 21 and the spacer 22. At this time, since heat dissipation of the detection line 30 is good, the resin sometime hardly melt around the detection line 30. In this regard, since the protrusion 21k is provided around the detection line 30 in the electric power storage module 1, the resin can be disposed closer to the heat source, and the sealability is improved.

In addition, in the electric power storage module 1, the lead-out portions 20p of the plurality of detection lines 30 are dispersed at the plurality of positions in the third direction D3 by providing the lead-out portions 20p adjacent to each other in the first direction D1 at different positions in the third direction D3. Then, the protrusion 21k is formed with the width over the plurality of positions in the third direction D3. As described above, the lead-out portions 20p of the detection lines 30 adjacent to each other in the first direction D1 are located at different positions in the third direction D3, whereby the separation between the detection lines 30 in the first direction D1 is secured.

In addition, at this time, since the protrusions 21k are formed in the sealing members 21 with the width over the plurality of positions where the lead-out portion 20p of the detection lines 30 are provided, the sealing members 21 are more easily prepared as compared with a case of manufacturing a plurality of types of the sealing members 21 provided with the protrusions 21k corresponding to the plurality of positions of the lead-out portion 20p, respectively.

In addition, in the electric power storage module 1, the current collector 15 and the detection line 30 may be made of different types of metal, and the thermal conductivity of metal forming the detection line 30 may be lower than the thermal conductivity of metal forming the current collector 15. In this case, the heat generated when the outer side face 20s is formed by welding the sealing member 21 and the spacer 22 is suppressed from being released to the current collector 15 via the detection line 30, and a welding defect between the sealing member 21 and the spacer 22 is suppressed.

In addition, in the electric power storage module 1, the current collector 5 and the detection line 30 may be made of metal, and the sealing member 21 may be made of an acid-modified resin. In this case, the joint strength between the sealing member 21 and each of the current collector 15 and the detection line 30 is secured, and the sealability is improved.

In addition, in the electric power storage module 1, the detection line 30 is embedded in the sealing member 21 in a portion where the sealing member 21 and the spacer 22 overlap each other along the first direction D1. Therefore, in a portion where the sealing member 21 and the spacer 22 overlap each other, the detection line 30 is embedded in the sealing member 21 made of an acid-modified resin that can be suitably joined to metal. Therefore, even if the spacer 22 is not an acid-modified resin, it is possible to perform reliable sealing by the mutual dissolution with the sealing member 21 in this portion.

In addition, in the electric power storage module 1, at least two of the plurality of detection lines 30 are disposed so as to overlap each other when viewed in the first direction D1, and the protrusions 21k in the lead-out portions 20p of the detection lines 30 overlapping each other when viewed in the first direction D1 are separated from each other in the first direction D1. Therefore, since the unevenness is formed in the lead-out portions 20p of the detection lines 30 on the outer side face 20s, a creepage distance between the detection lines 30 adjacent to each other in the first direction D1 becomes long, so that the short circuit between the detection lines 30 is suppressed.

Further, in the electric power storage module 1, the notch 34 is provided in the portion of the detection line 30 sandwiched between the current collector 15 and the sealing member 21 along the first direction D1. Therefore, the detection line 30 is prevented from coming off by the anchor effect due to the notch. In particular, since the notch 34 is provided in the portion of the detection line 30 sandwiched between the current collector 15 and the sealing member 21, the anchor effect is exhibited to prevent the detection line 30 from coming off from the point in time when the sealing member 21 is welded to the current collector 15 and the detection line 30.

The above embodiment describes one aspect of the electric power storage module. Therefore, the above-described electric power storage module 1 can be changed in any manner.

For example, the detection line 30 is provided with the notch 34 recessed in the third direction D3 in the above embodiment. However, the notch 34 is recessed in any direction, and may be recessed in, for example, the second direction D2.

In addition, in the above embodiment, the aspect in which the protrusions 21k are provided in the lead-out portions 20p of the detection lines 30 on the outer side face 20s of the sealing body 20 has been described. However, the protrusions 21k are not necessarily provided on the outer side face 20s of the sealing body 20. The protrusions 21k are not necessarily provided when the welded end portion 23 can be formed with a sufficient welding width by further increasing the amount of heating or the like at the time of welding the sealing members 21 and the spacers 22 around the lead-out portions 20p of the detection lines 30.

Furthermore, the thermal conductivity of the detection line 30 may be equal to or higher than the thermal conductivity of the current collector 15, or the current collector 15 and the detection line 30 may be made of the same material.

In addition, the case where the detection lines 30 is the voltage detection line has been exemplified in the above embodiment. However, the detection line 30 may be a temperature detection line connected to a temperature sensor provided in the electrode stack 10.

The above embodiment is additionally described as below.

The electric power storage module is [1] "An electric power storage module including: an electrode stack configured by stacking a plurality of electrodes along a first direction, each of the electrodes including a current collector provided with an active material layer and a detection line joined to the current collector; and a sealing body provided on the electrode stack to surround the electrode stack and configured to seal an internal space between the current collectors adjacent to each other in the first direction, in which the sealing body includes a plurality of sealing members made of a resin and welded to the plurality of electrodes, respectively, a plurality of spacers each of which is made of a resin, disposed between the sealing members adjacent to each other in the first direction, and forms the internal space together with each of the sealing members, and an outer side face formed by a first end face of each of the sealing members on an opposite side to the internal space and a second end face of each of the spacers on an opposite side to the internal space by welding each of the sealing members and each of the spacers to each other, each of the plurality of sealing members is welded to the current collector and the detection line joined to the current collector, and the detection line extends from the current collector and is led out from the outer side face along a second direction intersecting the first direction".

An electric power storage module may be [2] "The electric power storage module according to [1], in which the outer side face includes a protrusion protruding in the second direction in a lead-out portion of the detection line from the outer side face".

An electric power storage module may be [3] "The electric power storage module according to [2], in which the lead-out portions of a plurality of the detection lines are distributed at a plurality of positions in a third direction intersecting the first direction and the second direction as the lead-out portions adjacent to each other in the first direction are provided at different positions in the third direction, and the protrusion is formed with a width over the plurality of positions in the third direction".

An electric power storage module may be [4] "The electric power storage module according to [2] or [3], in which at least two of a plurality of the detection lines are disposed to overlap each other when viewed in the first direction, and the protrusions in the lead-out portions of the detection lines overlapping each other when viewed in the first direction are separated from each other in the first direction".

An electric power storage module may be [5] "The electric power storage module according to any one of [1] to [4], in which the current collector and the detection line are made of different types of metal, and a thermal conductivity of metal forming the detection line is lower than a thermal conductivity of metal forming the current collector".

An electric power storage module may be [6] "The electric power storage module according to any one of [1] to [5], in which the current collector and the detection line are made of metal, and each of the sealing members is made of an acid-modified resin".

An electric power storage module may be [7] "The electric power storage module according to [6], in which detection line is embedded in each of the sealing members in a portion where each of the sealing members and each of the spacers overlap each other along the first direction".

An electric power storage module may be [8] "The electric power storage module according to any one of [1] to [7], in which the detection line includes a notch provided in a portion sandwiched between the current collector and each of the sealing members along the first direction".

### Industrial Applicability

According to the present disclosure, there is provided an electric power storage module capable of suppressing a local increase in thickness of a stack while suppressing deformation of a current collector.

### Reference Signs List

- 1: Electric power storage module

- 10: Electrode stack
- 15: Current collector
- 20: Sealing body
- 20s: Outer side face
- 20p: Lead-out portion
- 21: Sealing member
- 21s: First end face
- 21k: Protrusion
- 22: Spacer
- 22s: Second end face
- 22k: Recess
- 30: Detection line
- 34: Notch.

## Claims

1. An electric power storage module comprising:
an electrode stack configured by stacking a plurality of electrodes along a first direction, each of the electrodes including a current collector provided with an active material layer and a detection line joined to the current collector; and
a sealing body provided on the electrode stack to surround the electrode stack and configured to seal an internal space between the current collectors adjacent to each other in the first direction,
wherein the sealing body includes
a plurality of sealing members made of a resin and welded to the plurality of electrodes, respectively,
a plurality of spacers each of which is made of a resin, disposed between the sealing members adjacent to each other in the first direction, and forms the internal space together with each of the sealing members, and
an outer side face formed by a first end face of each of the sealing members on an opposite side to the internal space and a second end face of each of the spacers on an opposite side to the internal space by welding each of the sealing members and each of the spacers to each other,
each of the plurality of sealing members is welded to the current collector and the detection line joined to the current collector, and
the detection line extends from the current collector and is led out from the outer side face along a second direction intersecting the first direction.

2. The electric power storage module according to claim 1, wherein the outer side face includes a protrusion protruding in the second direction in a lead-out portion of the detection line from the outer side face.

3. The electric power storage module according to claim 2, wherein the lead-out portions of a plurality of the detection lines are distributed at a plurality of positions in a third direction intersecting the first direction and the second direction as the lead-out portions adjacent to each other in the first direction are provided at different positions in the third direction, and
the protrusion is formed with a width over the plurality of positions in the third direction.

4. The electric power storage module according to claim 2, wherein
at least two of a plurality of the detection lines are disposed to overlap each other when viewed in the first direction, and
the protrusions in the lead-out portions of the detection lines overlapping each other when viewed in the first direction are separated from each other in the first direction.

5. The electric power storage module according to claim 1, wherein
the current collector and the detection line are made of different types of metal, and
a thermal conductivity of metal forming the detection line is lower than a thermal conductivity of metal forming the current collector.

6. The electric power storage module according to claim 1, wherein
the current collector and the detection line are made of metal, and
each of the sealing members is made of an acid-modified resin.

7. The electric power storage module according to claim 6, wherein the detection line is embedded in each of the sealing members in a portion where each of the sealing members and each of the spacers overlap each other along the first direction.

8. The electric power storage module according to any one of claims 1 to 7, wherein the detection line includes a notch provided in a portion sandwiched between the current collector and each of the sealing members along the first direction.
